# EUROPEAN PATENT APPLICATION

(11) **EP 0 740 904 A1**
(43) Date of publication of application: **06.11.1996**
(21) Application number: 95201133.6
(22) Date of filing: 02.05.1995
(51) Int. Cl.: A23G 1/04, A23G 1/02

(54) **Improving wettability of powders by microwave treatment**

(71) Applicant: SOCIETE DES PRODUITS NESTLE S.A., CH-1800 Vevey (CH)
(72) Inventor: Hofstaetter, Dieter, CH-1806 St. Legier (CH); Le Viet, Toai, CH-1806 St. Legier (CH)
(74) Representative: Pate, Frederick George

(57) **Abstract**

The invention relates to an apparatus and a method for improving the wettability of agglomerated cocoa and sugar containing powder such as cocoa beverage products. The method according to the invention comprises exposing, in a microwave reflective cavity (19), the agglomerated cocoa and sugar containing powder to electromagnetic radiation of wave generator (14) at a frequency in the microwave region so as to transmit electromagnetic energy to the agglomerated cocoa and sugar containing powder in an amount sufficient to increase the temperature of the agglomerated cocoa and sugar containing powder to at least 60°C. The agglomerated cocoa and sugar containing powder contains lecithin as emulsifier.

## Description

The present invention relates to a method and an apparatus for improving the wettability of agglomerated cocoa and sugar containing powder.

Cocoa and sugar containing products are for example cocoa beverage or baking powder mix intended to be dispensed in liquid such e.g. milk, water etc.

To produce such products with a good wettability is very difficult. The wettability of the powder will often vary which is unsatisfactory when producing quality products. Furthermore, the wettability of such powders has a tendency not to be stable and to decrease with storage time.

The effect of a poor wettability is that when pouring cocoa and sugar containing powder into cold liquid, such as milk or water having a temperature in the range of e.g. 5-15°C it is difficult to get all the powder wetted by the liquid. In a glass, rims of partly or unwetted powder may occur along the upper surface periphery, forming a film at the surface or lying at the bottom of the glass as deposit.

In the present specification the term 'cocoa and sugar containing powder' means a powder comprising 5 to 25% cocoa, preferably about 20%, at least 60% sugar, e.g. sucrose, advantageously above 70%, and 0.5% to 2% emulsifier, advantageously Lecithin. Other ingredients comprised in the cocoa and sugar containing powder may be e.g. salt and flavours such as vanillin, cinnamon flavour or fruit flavouring, and the remaining part may be a filler.

'Wettability' refers to the powder's ability to be wetted or dispensed in liquid.

In accordance with the invention, it has surprisingly been found that by means of electromagnetic radiation, it is possible to substantially improve the wettability of agglomerated cocoa and sugar containing powder. We have thus devised a method and an apparatus for improving the wettability of a cocoa and sugar containing powder. Cocoa and sugar containing powder produced with this method will when mixed with liquid give a nice homogenous drink without rims, films or deposit of unwetted powder. The treatment has the advantage that it does not affect the organoleptic quality.

'Electromagnetic radiation in the microwave range' in the present specification means radiation having a frequency from 10 to 300,000 MHz. The term 'agglomerated powder' refers to agglomerated particle sizes in the range of 0.2 to 0.4 mm.

Furthermore, it has advantageously been found that with the method according to the invention the wettability of the powder is stable for at least a half year period, possibly longer. In fact it has very surprisingly been observed that the wettability improves with elapsed storage time.

A very surprising additional benefit obtained when treating cocoa and sugar containing powder in accordance with the method of the invention is that the bridging effect of the powder decreases. Bridging of powder products is well known from powder in dispensing hoppers such as found in automatic coffee/cocoa beverage machines. The powder product will then stick together in blocks and block the movement of the powder through the hopper; an effect which is often increased with higher humidity in the hopper. To avoid the bridging problem hoppers dispensing powder products are often provided with mechanical means for 'stirring' the powder. Cocoa and sugar containing powder treated in accordance with the invention will have a lower bridging tendency than untreated powder and thus provide a better flow of the powder through e.g. a dispensing hopper without any need for 'stirring' means.

Although it is not intended to limit the present invention to any particular theory, it is believed that the above described improved wettability and decrease in bridging tendency is due to the influence that the electromagnetic radiation has on the closeness of powder's crystals. The exposure to electromagnetic radiation is thought to separate the crystals and to give a more porous structure to the powder so that it is less resilient to liquid. Especially the high sugar content is presumed to be important to achieve these improved qualities as sugar is a very good absorbent of electromagnetic radiation. A porous structure will give a lower weight/volume dependence and this may influence the bridging effect. Treated and non-treated powder have been studied under microscope and it appears that some agglomerates in the non-treated powder are covered by a thin deposit which is not visible in the treated powder. Hence, this deposit may have been destroyed by the treatment, and it is possible that this has an effect on the characteristics of the powder.

According to a first aspect, the present invention relates to a method for improving the wettability of agglomerated cocoa and sugar containing powder, comprising
exposing the agglomerated cocoa and sugar containing powder to electromagnetic radiation at a frequency in the microwave region so as to transmit electromagnetic energy to the agglomerated cocoa and sugar containing powder in an amount sufficient to increase the temperature of the agglomerated cocoa and sugar containing powder to at least 60°C.

The agglomerated sugar and cocoa containing powder which is to be exposed to the electromagnetic radiation may for example be produced as follows: Sugar and emulsifier are mixed and passed through a micro mill, then cocoa powder and flavours are added and blended with the sugar and the emulsifier. The mixture is then agglomerated e.g. in an agglomeration tower or a spray-dryer and cooled in a fluid-bed.

Surprisingly good results are obtained when the sugar and cocoa powder comprises lecithin as an emulsifier, preferably about 1%.

Trials have been carried out with an un-agglomerated powder but no significant improvement was observed.

The composition of the powder preferably comprises 77% sugar, 20% cocoa, 1% lecithin (such as lecithin soya), and flavours such as vanillin and cinnamon.

When treated in accordance with the invention it is preferred that the agglomerated cocoa and sugar containing powder is conducted through a processing chamber wherein the powder is exposed to the electromagnetic radiation. This may be done in a batch wise conduction or advantageously with the powder continuously flowing while being exposed. The processing chamber is preferably at least partly made of a material which is substantially transparent to electromagnetic radiation. Such material may e.g. be glass, plastics: for example Teflon or polyethylene, or ceramics.

In a preferred embodiment according to the invention the processing chamber is conveniently positioned within a housing defining a microwave reflecting cavity, e.g. metal casing, and the exposure takes place within this cavity.

The temperature of the agglomerated cocoa and sugar containing powder may advantageously be increased to the range of 70-110°C, preferably to 80-110°C. Especially good results have been obtained when the temperature has been increased to the range of 90-110°C, particularly about 100°C.

It is preferred that the frequency of the electromagnetic radiation is in the range from 10 MHz to 30,000 MHz, conveniently at one of the industrial frequencies 13.5 MHz, 27.12 MHz, 40 MHz, 915 MHz, or 2450 MHz. Favourably, the frequency is in the range of 2400 to 2500 MHz, about 2450 MHz. Alternatively, the radiation may be at any frequency which is well absorbed by sugar or one of the other substances of the powder.

According to a second aspect, the present invention relates to an apparatus for improving the wettability of agglomerated cocoa and sugar containing powder, said apparatus comprises
a processing chamber,
conduit means for passing agglomerated cocoa and sugar containing powder through said processing chamber,
an electromagnetic wave generator for exposing the agglomerated cocoa and sugar containing powder in the processing chamber to electromagnetic radiation having a frequency in the microwave range so as to transmit electromagnetic energy thereto,
control means for controlling the operation of the electromagnetic wave generator so that the electromagnetic energy is transmitted to the agglomerated cocoa and sugar containing powder in an amount sufficient to increase the temperature of the agglomerated cocoa and sugar comprising powder to at least 60°C in order to improve the wettability of the powder.

In a preferred embodiment of the apparatus according to the invention the processing chamber is substantially transparent to microwaves and positioned within a microwave reflective cavity as described above.

The conduit means may be adapted to pass the agglomerated cocoa and sugar containing powder through the processing chamber in a continuous flow while the control means controls the flow rate of the powder through the processing chamber, e.g. by means of flow sensors or detectors. In such an embodiment of the invention it is preferred that the conduit means comprises supply means e.g. employing a screw dispenser which allows set and control of the flow rate. Alternatively, the conduit means may be adapted to batch-wise treatment of powder. In a preferred embodiment of the apparatus according to the invention the heating by means of the electromagnetic radiation of the powder and the frequency adapted may advantageously be in the ranges described above. The control means may further comprise sensor means measuring the temperature of the powder.

To obtain a homogenous exposure and thus heating of the cocoa and sugar containing powder the apparatus preferably comprises turbulating means for causing turbulence in the powder while it is being exposed. For example, the chamber may be rotatable relative to the electromagnetic wave generator. In the embodiment of the invention adapted to provide a continuous flow of powder through the conduit means and processing chamber, the chamber may preferably be in the form of a rotatable tube, conveniently defining an Archimedes screw at the inner cylinder surface which gives a regular flow through the cylinder.

Additionally, the apparatus may be provided with means for stirring the waves in the cavity described above in order to obtain a homogenous exposure of the powder in the processing chamber and thus an even heating of the powder.

The invention also relates to an agglomerated cocoa and sugar containing product which has been processed in accordance with the method or with an apparatus as described above.

It should be understood that the present invention is not limited to a method and an apparatus for treating cocoa and sugar containing powder but also relates to treatment of agglomerated cocoa powder products e.g. beverage or baking mixing powders having a high sugar content and flavours such as vanilla, lemon, orange, cinnamon or artificial flavouring etc.

The invention will now be described in detail with reference to the drawings. In the drawings
Fig. 1 illustrates an embodiment of the apparatus according to the invention for a batch-wise treatment of agglomerated cocoa and sugar containing powder,
Fig. 2 illustrates an embodiment of the apparatus according to the invention for treatment of a continuous flow of agglomerated cocoa and sugar containing powder,
Fig. 3 shows a perspective view of a processing chamber used for the exposure of electromagnetic radiation to the agglomerated cocoa and sugar containing powder, and
Fig. 4 and Fig. 5 show test result samples from a wettability test.

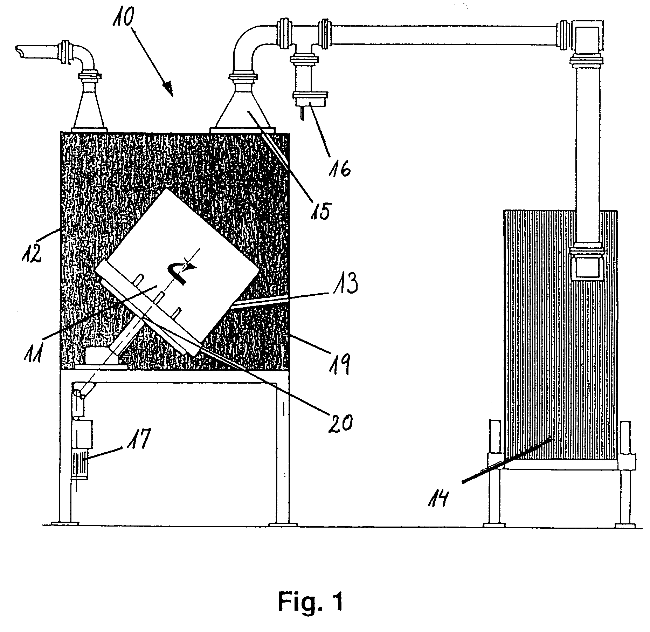

Fig. 1 shows an embodiment of the apparatus 10 according to the invention for a batch-wise treatment of agglomerated cocoa and sugar containing powder 11. The apparatus 10 comprises a housing 12 defining a cavity 19 and being substantially opaque to electromagnetic radiation in the micro wave region. The housing is preferably provided with metallic wall elements forming the cavity 19 or the cavity may be a metal casing. The housing 12 comprises a processing chamber 13 substantially transparent to electromagnetic radiation, preferably a glass container. In this embodiment of the invention the glass container 13 is positioned on a turntable 20 which is inclined and rotatably mounted within the housing 12. The turntable 20 is driven by a motor 17 positioned outside the housing. During the treatment of the agglomerated cocoa and sugar containing powder the turntable 20 is rotated in order to give the powder a homogenous exposure.

The apparatus 10 further comprises an electromagnetic wave generator 14 for exposing the cocoa and sugar containing powder 11 to electromagnetic radiation in the processing chamber 13 so as to transmit electromagnetic energy thereto. The electromagnetic radiation is introduced into the housing 12 by means of a horn 15 which via a matching system 16 is connected to the wave generator 14. For experiment A, described below, the wave generator preferably has power of 2 kW and a frequency of about 2450 Hz. However, for industrial purposes a generator may be used providing 50 kW at a frequency of 915 MHz permitting an output of up to 500 kg/hour. Alternatively, one of the other industrial frequencies can be used.

The apparatus 10 is further provided with control means (not shown in the drawings) for controlling the functions. The control means also controls the time the cocoa and sugar comprising powder is exposed and the temperature to obtain a desired increase in the temperature and thus the wanted wettability.

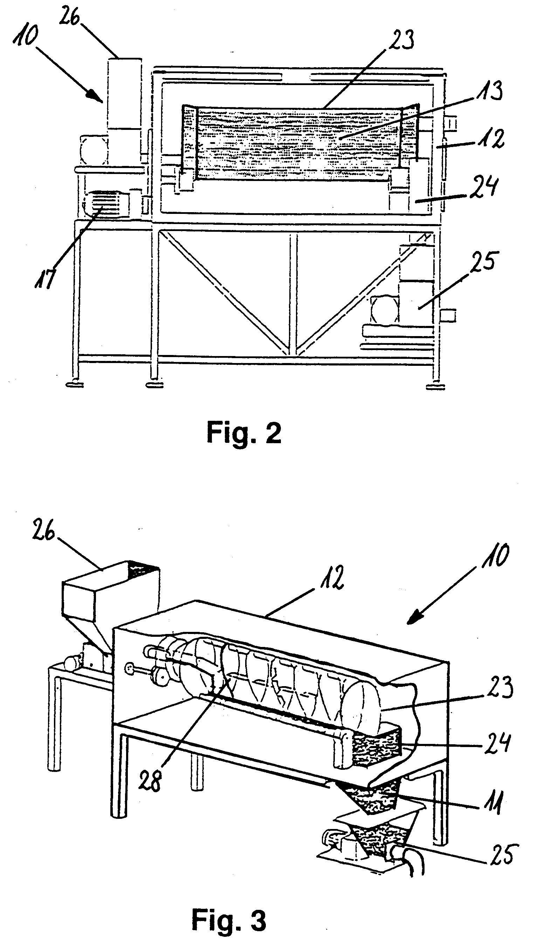

Figs. 2 and 3 show an embodiment of the apparatus 10 according to the invention for treatment of a continuous flow of agglomerated cocoa and sugar containing powder 11. The apparatus is provided with a housing 12 comprising a processing chamber 13, preferably in the form of an elongated glass tube 23 having inwardly protruding baffle elements 28. The baffles advantageously define an Archimedes screw which gives a regular flow of powder 11 through the tube 23. The cylinder is rotary mounted within the housing 12 and driven by means of a motor 17 positioned outside the housing.

Like the apparatus described in Fig. 1 the apparatus in Fig. 2. comprises an electromagnetic generator, horn and matching system (not shown in this drawing).

The agglomerated cocoa and sugar containing powder 11 is supplied to one end of the elongated glass tube 23 via a supply hopper 26, and when the powder reaches the other end it passes through a funnel 24 to an output hopper 25.

Further to the function of the control means described in relation to Fig. 1 the apparatus according to the invention shown in Fig. 2 is provided with means for controlling the flow of cocoa and sugar containing powder through the apparatus 10.

Two series of experiments, A and B, were carried out. One using the batch equipment described in Fig. 1 and the other using the continuous unit described in Fig. 2. The agglomerated cocoa and sugar containing powder processed as an example in these experiments comprises: approximately (expressed on dry matter) 77% sugar, 20% cocoa, 1% lecithin, 1% water and salt, vanillin and cinnamon.

The powder used for the experiments was agglomerated and produced with a process as the one described above.

### Experiment A

The batch equipment used was of the kind described in Fig. 1. The sample is introduced into the glass vessel placed on the inclined rotary plate, making thus the treatment more homogenous.

The trial conditions were:
- weight of powder product per batch: 500 g
- temperature of the product after treatment: 70°, 85° and 100°C.
- time for each treatment: 2-3 minutes, depending on the target temperature.
- moisture loss: 0.5% only for final temperature 100°C.
- electromagnetic radiation at a frequency of 2450 MHz and a power of 2 kW.

### Experiment B

The continuous treatment was carried out with the equipment shown in Fig. 2 The equipment is a modified coffee quick roaster. The powder product was fed into the glass rotary cylinder comprising internal baffles acting like an Archimedes screw. The cylinder has dimensions as follows: 600 mm, length 2000 mm, and thickness of the glass wall 10 mm. The rotary cylinder together with the Archimede's screw-like system make the powder product flow continuously through the cylinder in a regular way so that it receives a homogeneous electromagnetic heating.

The feeding was done by means of a screw dispenser allowing pre-setting and control of the flow rate of powder product. Thus to obtain a given temperature of the product at the cylinder's outlet, the flow rate, the rotation speed of the cylinder, and the electromagnetic power may be adjusted.

The operating conditions were:

| | | | |
|---|---|---|---|
| • electromagnetic radiation at a frequency of 2450 MHz and power supplied by two 6 kW generators supplying 5 kW each. | | | |
| • flow rate, kg/h: | 50 | 60 | 72 |
| • time spent by the product | 4 | 3.5 | 3 |
| in the cylinder, min: | | | |
| • final temperature, °C | 80° | 75° | 60° |

The product flow was very regular and no agglomeration, lumps or hot spots were noted, not even when heated up to 100°C.

The wettability of the treated powders were determined straight after the treatment and after 3 and 6 months storage at room temperature. In the wettability test 20 g samples of the powder composition described above were poured into 200 ml milk at 12°C in a glass.

| Sample | Wettability (min. sec.) months of storage | | |
|---|---|---|---|
| | 0 | 3 | 6 |
| Untreated | 1′50˝ | 1′58˝ | 1′56 |
| 70°C | 28˝ | 26˝ | 26˝ |
| 85°C | 24˝ | 24˝ | 18˝ |
| 100°C | 18˝ | 16˝ | 13˝ |

A very surprising effect of the treatment should be remarked: the higher the temperature of treatment the better wettability. In particular a very good result is obtained with the treatment having an end temperature at 100°C.

The powders treated in a continuous way showed similar results as the continuously treated powder when submitted to a storage test.

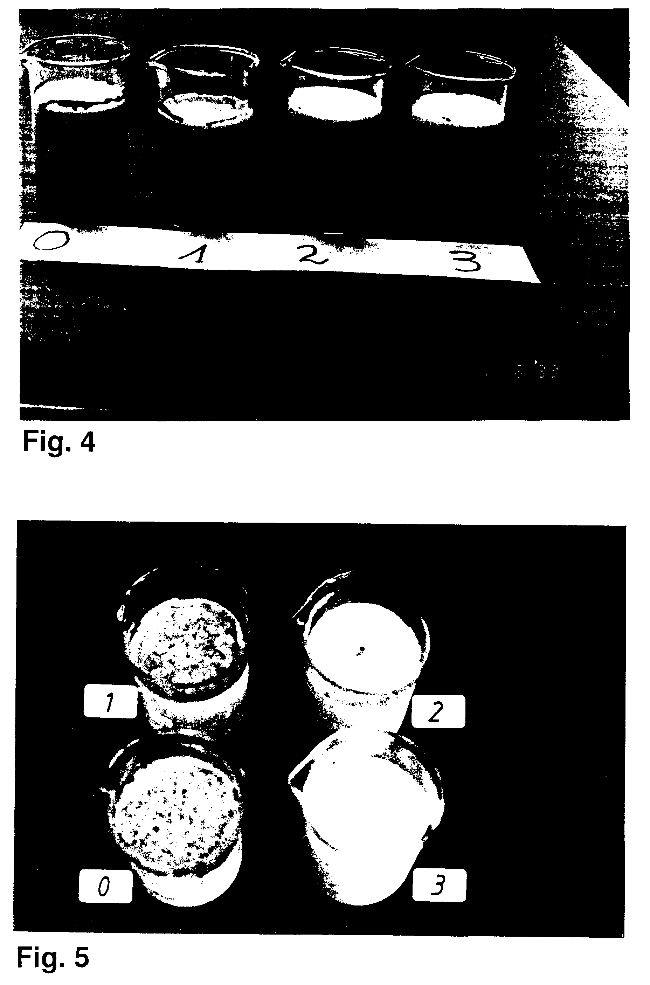

Fig. 4 and 5 show glass breakers containing milk and powder test samples, the result of which is given above. Glass 0. is the untreated sample; 1. is heated to 70°C, 2. is heated to 85°C, and 3. to 100°C. In Fig. 4 rings of powder product will be apparent at the surface in glass 0. 1. 2. but not in 3. In Fig. 5 the glass breakers are seen from above. The coloured film can be seen very clearly at the surface in glass 0. and 1., it is not so distinct in glass 2. and nearly no film is visible in glass 3.

It should be noted that although the experiments were performed under good conditions, under more stringent controlled conditions we expect an even better result.

Furthermore, experiments exposing non-agglomerated sugar and cocoa containing powder were carried out but no remarkable improvement of the wettability of the powder could be noticed.
- 10: apparatus
- 11: sugar and cocoa containing powder
- 12: housing
- 13: processing chamber
- 14: electromagnetic generator
- 15: horn
- 16: matching system
- 17: driving means / motor
- 18: conduct means
- 19: cavity
- 20: turn table
- 22: elongated housing
- 23: glass tube
- 24: funnel
- 25: output hopper
- 26: supply hopper
- 28: bafflers

## Claims

1. A method for improving the wettability of agglomerated cocoa and sugar containing powder, comprising
exposing the agglomerated cocoa and sugar containing powder to electromagnetic radiation at a frequency in the microwave region so as to transmit electromagnetic energy to the agglomerated cocoa and sugar containing powder in an amount sufficient to increase the temperature of the agglomerated cocoa and sugar containing powder to at least 60°C.

2. A method according to claim 1, wherein the agglomerated cocoa and sugar containing powder contains lecithin as emulsifier.

3. A method according to claims 1 and 2, wherein the cocoa and sugar containing powder is conducted through a processing chamber wherein the powder is exposed to the electromagnetic radiation.

4. A method according to any of claims 1 to 3, wherein the cocoa and sugar containing powder flows continuously while being exposed to the electromagnetic radiation.

5. A method according to any of claims 1 to 4, wherein the temperature of the cocoa and sugar containing powder is increased to about 70-110°C.

6. A method according to claim 5, wherein the temperature is in the range of 80-110°C.

7. A method according to claim 6, wherein the temperature is in the range of 90-110°C, preferably about 100°C.

8. A method according to claim 7, wherein the frequency is in the range from 10 MHz to 30,000 MHz.

9. A method according to claim 8, wherein the frequency is in the range from 2400 to 2500 MHz, preferably about 2450 MHz.

10. An apparatus for improving the wettability of agglomerated cocoa and sugar containing powder, said apparatus comprising
a processing chamber,
conduit means for passing agglomerated cocoa and sugar containing powder through said processing chamber,
an electromagnetic wave generator for exposing the agglomerating cocoa and sugar containing powder in the processing chamber to electromagnetic radiation having a frequency in the microwave range so as to transmit electromagnetic energy thereto,
control means for controlling the operation of the electromagnetic wave generator so that the electromagnetic energy is transmitted to the agglomerated cocoa and sugar containing powder in an amount sufficient to increase the temperature of the agglomerated cocoa and sugar containing powder to at least 60°C in order to improve the wettability of the agglomerated powder.

11. An apparatus according to claim 10, wherein the processing chamber is substantially transparent to electromagnetic radiation and the apparatus further comprises a microwave reflective cavity wherein said chamber is positioned.

12. An apparatus according to claims 10 and 11, wherein the conduit means passes the agglomerated cocoa and sugar containing powder through the processing chamber in a continuous flow and the control means controls the flow rate of the powder through the processing chamber.

13. An apparatus according to any of claims 10 to 12, wherein the temperature of the cocoa and sugar containing powder is increased to about 70-110°C.

14. An apparatus according to claim 13, wherein the temperature is in the range of 80-110°C.

15. A apparatus according to claim 14, wherein the temperature is in the range of 90-110°C, preferably about 100°C.

16. An apparatus according to any of claims 10 to 15, wherein the frequency is in the range of 10 MHz to 30,000 MHz.

17. An apparatus according to claim 16, wherein the frequency is in the range of 2400 to 2500 MHz, preferably about 2450 MHz.

18. An apparatus according to any of claims 10 to 17, further comprising turbulating means for causing turbulence in the cocoa and sugar containing powder while being exposed to electromagnetic wave radiation.

19. An apparatus according to any of claims 10 to 18, wherein the chamber is rotatable relative to the electromagnetic wave generator.

20. An apparatus according to any of claim 10 to 19, wherein the chamber is a tube defining an Archimedes screw at the inner cylinder surface.

21. An agglomerated cocoa and sugar containing product processed by the method claimed in any of claims 1 to 9.
